# EUROPÄISCHE PATENTSCHRIFT

(11) **EP 1 742 763 B1**
(45) Veröffentlichungstag und Bekanntmachung des Hinweises auf die Patenterteilung: **27.02.2008**
(21) Anmeldenummer: 05726518.3
(22) Anmeldetag: 31.03.2005
(51) Int. Cl.: B23Q 11/00

(54) **STAUBAUFFANGBEHÄLTER FÜR EINE HANDWERKZEUGMASCHINE**
DUST COLLECTING CONTAINER FOR A HAND-HELD MACHINE TOOL
BAC COLLECTEUR DE POUSSIERE POUR MACHINE-OUTIL

(30) Priorität: 21.04.2004 DE 102004019155
(43) Veröffentlichungstag der Anmeldung: 17.01.2007
(73) Patentinhaber: ROBERT BOSCH GMBH, 70442 Stuttgart (DE)
(72) Erfinder: REICH, Doris, 70565 Stuttgart (DE); WUENSCH, Steffen, 71088 Holzgerlingen (DE)
(86) Internationale Anmeldenummer: PCT/EP2005/051462
(87) Internationale Veröffentlichungsnummer: WO 2005/102598

(56) Entgegenhaltungen:
- DE-A1- 19 924 547
- DE-U1- 9 012 439
- US-A- 2 847 084
- US-A- 5 065 473
- US-A1- 2002 174 774
- PATENT ABSTRACTS OF JAPAN Bd. 1999, Nr. 11, 30. September 1999 (1999-09-30) & JP 11 155784 A (NAMURA DENKI KOGYO KK), 15. Juni 1999 (1999-06-15)
- BLACK AND DECKER-PRODUCT GUIDE: "360° Virtual Tours" [Online] 4. März 2003 (2003-03-04), BLACK AND DECKER - CUSTOMER SERVICE , XP002331668 Gefunden im Internet: URL:http://web.archive.org/web/20030304094 543/www.blackanddecker.com/partners/defaul t.asp> [gefunden am 2005-06-13] das ganze Dokument

## Beschreibung

### Stand der Technik

Die Erfindung geht aus von einem Staubauffangbehälter für eine eine Staubabsaugvorrichtung aufweisende Handwerkzeugmaschine nach dem Oberbegriff des Anspruchs 1.

Eine bekannte, als Schwingschleifer ausgebildete Handwerkzeugmaschine (DE 199 24 547 A1) weist eine in ihrem Gehäuse integrierte Staubabsaugvorrichtung mit einem am Gehäuse ausgebildeten Staubausblasstutzen auf. An dem Staubausblasstutzen ist ein staubdichter Staubauffangbehälter zum Sammeln des Schleifstaubs, auch Staubbox genannt, mit seinem Einlassstutzen lösbar befestigt. Der Staubauffangbehälter ist zweiteilig ausgebildet und umfasst einen Sammelkasten mit einer zumindest bereichsweise durchsichtigen Seitenwand und einen diesen oben verschließenden Deckel, der am Sammelkasten lösbar verriegelt ist. Um ein möglichst großes Fassungsvermögen des Staubauffangbehälters zu erhalten, ist im Deckel eine Vielzahl von Luftaustrittsöffnungen vorgesehen, die von einem an der Unterseite des Deckels angeordneten Staubfilter überdeckt sind. Die durchsichtige Seitenwand dient als Sichtfenster zur Überwachung des Füllstandes des Staubauffangbehälters. Zum Leeren des Staubauffangbehälters wird diese von der Handwerkzeugmaschine abgenommen, wobei der im Sammelkasten mündende Einlassstutzen von dem Staubausblasstutzen abgezogen wird. Nach Öffnen des Deckels kann der Sammelkasten entleert werden.

Bei der Schleifbearbeitung von Werkstücken wird der Staubauffangbehälter zunehmend mit dem anfallenden Schleifstaub gefüllt. Dabei nimmt dessen Fassungsgrad ständig ab, und mit dem dadurch reduzierten Absauggrad der Staubabsaugung wird immer mehr Schleifstaub an die Umgebung abgegeben, was zu einer zunehmenden Staubbelastung des Bedienenden führt. Bei Bandschleifern tritt zusätzlich das Problem auf, dass wegen des recht hohen Abtrags der Staubauffangbehälter sehr schnell gefüllt wird und dadurch der Bedienende meist erst dann auf den übervollen Staubauffangbehälter aufmerksam wird, wenn der Staubausblasstutzen und weitere Staubführungskanäle in der Handwerkzeugmaschine verstopft sind. Zwecks Reinigen ist dann eine Zerlegung der Handwerkzeugmaschine erforderlich.

Ein bekannter Staubbehälter für einen Ministaubsauger (DE 9012 439 U1) ist als geschlossener Behälter ausgebildet und besitzt lediglich eine schlitzförmige Öffnung zum Aufstecken auf das Saugteil des Ministaubsaugers, die mit einer Dicht-, lippe abgedichtet ist. In die von der Öffnung abgekehrte Stirnwand des Staubbehälters und in eine Längswand des Staubbehälters ist jeweils ein Sichtfenster luftdicht und flächeneben eingesetzt. Durch die Fenster kann die Staubfüllung beobachtet aber auch das ordnungsgemäße Aufsetzen des Behälters auf das Saugteil des Ministaubsaugers und das ordnungsgemäße Arbeiten der Staublippen überprüft werden.

Allgemein bekannt sind Behälter, die mit einer Markierung des maximal zulässigen und/oder minimal erforderlichen Füllstands versehen sind, wie dies beispielsweise bei Kühlwasserauftüllbehältern oder Scheibenwaschwasserbehältern in Kraftfahrzeugen der Fall ist.

### Vorteile der Erfindung

Der erfindungsgemäße Staubauffangbehälter für eine Handwerkzeugmaschine mit den Merkmalen des Anspruchs 1 hat den Vorteil, dass der Bedienende durch das Sichtfenster hindurch die im Staubauffangbehälter sich ansammelnde Füllmenge zu jedem Zeitpunkt optisch erfassen und bei Erreichen des noch für eine optimale Staubabsaugung zugelassenen, durch die beiden Füllstandsmarken markierten Füllgrads eine Entleerung des Staubauffangbehälters vornehmen kann. Durch die zueinander rechtwinklige Anordnungen der beispielsweise als Linie ausgebildeten, den maximal zugelassenen Füllstand markierenden Füllstandsmarken kann die im Staubauffangbehälter gesammelte Staubmenge im Vergleich zu der maximal zulässigen Füllmenge sowohl bei horizontaler als auch vertikaler Haltung der Handwerkzeugmaschine im Betrieb festgestellt werden.

Durch die in den weiteren Ansprüchen aufgeführten Maßnahmen sind vorteilhafte Weiterbildungen und Verbesserungen des im Anspruch 1 angegebenen Staubauffangbehälters möglich.

### Zeichnung

Die Erfindung ist anhand von in der Zeichnung dargestellten Ausführungsbeispielen in der nachfolgenden Beschreibung näher erläutert. Es zeigen:
- Fig. 1: eine Handwerkzeugmaschine mit daran angesetztem, im Längsschnitt dargestellten Staubauffangbehälter,
- Fig. 2: eine perspektivische Darstellung einer Stirnansicht des Staubauffangbehälters in Richtung Pfeil II in Fig. 1,
- Fig. 3: eine Seitenansicht des Staubauffangbehälters in Fig. 1 mit einem modifizierten Sichtfenster.

### Beschreibung der Ausführungsbeispiele

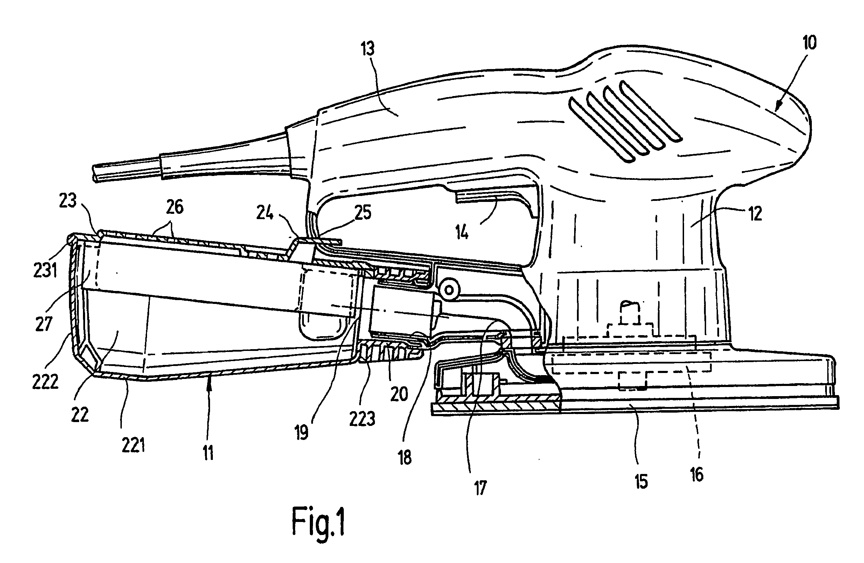

In Fig. 1 ist eine als Schwingschleifer ausgebildete Handwerkzeugmaschine 10 mit daran angesetztem Staubauffangbehälter 11, auch Staubbox genannt, dargestellt. Die Handwerkzeugmaschine besitzt ein Gehäuse 12, das einen Handgriff 13 mit Schalter 14 zum Ein- und Ausschalten der Handwerkzeugmaschine 10 aufweist. An dem Gehäuse 12 ist unten ein als Schleifplatte mit Durchtrittsöffnungen ausgestaltetes Schleifwerkzeug 15 bewegbar befestigt. Die Handwerkzeugmaschine 10 weist eine integrierte Staubabsaugvorrichtung auf, die ein im Gehäuse 12 rotierendes Lüfterrad 16, einen vom Lüfterrad 16 abführenden Staubkanal 17 und einen Staubausblasstutzen 18 umfasst, in dem der Staubkanal 17 mündet. Im Betrieb erzeugt das über dem Schleifwerkzeug 15 rotierende Lüfterrad 16 zwischen dem Schleifwerkzeug 15 und einem Werkstück einen Unterdruck. Dadurch wird Schleifstaub durch die Durchtrittsöffnungen des Schleifwerkzeugs hindurch angesaugt und über den Staubkanal 17 und den Staubausblasstutzen 18 ausgeblasen.
Zum Auffangen des Schleifstaubs ist der Staubauffangbehälter 11 lösbar an die Handwerkzeugmaschine 10 angesetzt, wozu ein eine Staubeinlassöffnung 19 umschließender Staubeinlassstutzen 20 des Staubauffangbehälters 11 auf den Staubausblasstutzen 18 am Gehäuse 12 der Handwerkzeugmaschine 10 aufgeschoben ist.

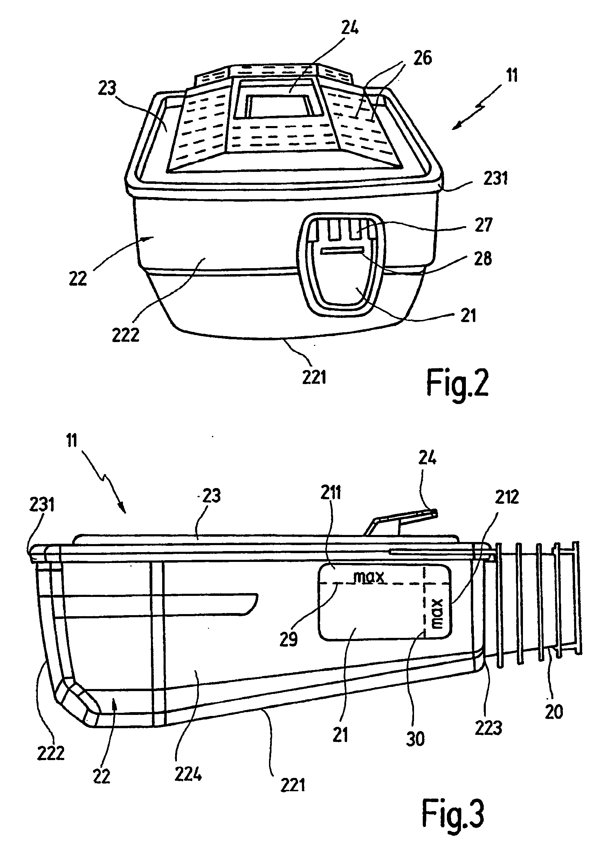

Der formfeste Staubauffangbehälter 11 ist in Fig. 1 im Längsschnitt, in Fig. 2 in perspektivischer Stirnansicht und in Fig. 3 in etwas modifizierter Form in Seitenansicht zu sehen. Der Staubauffangbehälter 11 hat eine Behälterwand, die ein Staubspeichervolumen umschließt. Die Behälterwand weist einerseits in einem Wandabschnitt die Staubeinlassöffnung 19, die von dem Staubausblasstutzen 18 umschlossen ist, und andererseits in einem davon entferntem Wandabschnitt ein Sichtfenster 21 auf, durch das hindurch die momentane Staubmenge, die das Staubspeichervolumen füllt, optisch erfasst werden kann.

Bei dem Ausführungsbeispiel des Staubauffangbehälters 11 gemäß Fig. 1 und 2 liegt der Wandabschnitt der Behälterwand, in dem das Sichtfenster 21 angeordnet ist, dem die Staubeinlassöffnung 19 enthaltenden Wandabschnitt des Staubauffangbehälters 11 gegenüber. Dabei ist das Sichtfenster 21 im Bereich einer erhöhten Luftströmung im Innern des Staubauffangbehälters 11 angeordnet, um einen Freiblaseffekt für das Sichtfenster 21 zu erreichen. Die Behälterwand ist aus einem Material gefertigt, das eine geringe Neigung zur statischen Aufladung hat. Das Sichtfenster 21 kann dadurch realisiert werden, dass beispielsweise ein Klarsichtdeckel aus modifiziertem Polypropylen in eine entsprechende Fensteröffnung in dem Wandabschnitt der Behälterwand staubdicht eingesetzt ist.

Im Ausführungsbeispiel der Fig. 3 ist das Sichtfenster 21 in einer von zwei Längsseiten der Behälterwand angeordnet, wobei die Anordnung des Sichtfensters 21 in der Längsseite so vorgenommen ist, dass es möglichst nahe derjenigen Stirnseite der Behälterwand liegt, die die Staubeinlassöffnung 19 aufweist

Der Staubauffangbehälter 11 ist in beiden Ausführungsbeispielen zweiteilig ausgebildet und weist einen Sammelkasten 22 auf, der auf seiner Oberseite von einem Deckel 23 verschlossen ist. Der Deckel 23 hält sich federelastisch überrastend mit einem Schnapprand 231 kraft und formschlüssig dicht an der Oberkante des Sammelkastens 22 fest und trägt einen nach oben ragenden Haken 24. Mit dem Haken 24 ist der Staubauffangbehälter 11 zusätzlich am Gehäuse 12 der Handwerkzeugmaschine 10 festlegbar, indem der Haken 24 bei Aufschieben des Staubeinlassstutzens 20 auf den Staubausblasstutzen 18 am Gehäuse 12 der Handwerkzeugmaschine 10 in eine Halteöffnung 25, die im Gehäuse 12, und zwar im hinteren Bereich des Handgriffs 14 angeordnet ist, eingeschoben wird (Fig. 1). Der Boden 221 des Sammelkastens 22 verläuft gegenüber der Achse des Staubeinlassstutzens 20 geneigt, so dass der Sammelkasten 22 eine im Längsschnitt keilförmige Kontur hat, die sich zum Staubeinlassstutzen 20 hin verjüngt. Der Deckel 23 trägt eine Vielzahl von Luftdurchtrittsöffnungen 26 (Fig. 1 und 2), denen auf der Innenseite des Deckels 23 ein als Faltenfilter ausgestaltetes Filterelement 27 aus Spezialpapier vorgeschaltet ist. In dem Ausführungsbeispiel der Fig. 1 und 2 ist das Sichtfenster 21 in der Stirnwand 222 des Sammelkastens 22 angeordnet, die von der die Staubeinlassöffnung 19 aufweisenden Stirnwand 223 des Sammelkasten 22 gegenüberliegt. In Fig. 2 sind im Sichtfenster 21 die Faltenlamellen des Filterelements 27 zu sehen. Eine im Sichtfenster 21 angeordnete Füllstandsmarke 28, die als Querlinie ausgebildet ist, markiert eine empfohlene Maximalfüllmenge im Sammelkasten 22, die noch einen ausreichenden Absauggrad des Schleifstaubs durch die integrierte Schleifstaubabsaugvorrichtung der Handwerkzeugmaschine 10 gewährleistet.

Der in Fig. 3 in Seitenansicht dargestellte Staubauffangbehälter 11 ist gegenüber dem in Fig. 1 und 2 dargestellten Staubauffangbehälter 11 nur hinsichtlich der Anordnung des Sichtfensters 21 modifiziert. Das Sichtfenster 21 ist in einer Seitenwand 224 des Sammelkastens 22 nahe der Stirnwand 223 angeordnet, die die Staubeinlassöffnung 19 trägt. Im Sichtfenster 21 sind zwei rechtwinklig zueinander angeordnete Füllstandsmarken 29, 30 vorgesehen, von denen die eine Füllstandsmarke 29 die empfohlene Maximalmenge markiert, wenn der Staubauffangbehälter 11 horizontal ausgerichtet ist, und die Füllstandsmarke 30 die empfohlene Maximalfüllmenge markiert, wenn der Staubauffangbehälter 11 vertikal ausgerichtet ist. Die beiden Füllstandsmarken 29, 30 sind im Ausführungsbeispiel der Fig. 3 als Linien ausgeführt, die in geringem Abstand parallel zu einer Fensterkante verlaufen. Dabei verläuft die Füllstandmarke 29 nahe der in Horizontallage des Staubauffangbehälters 11 oberen, langen Fensterkante 211 und die Füllstandsmarke 30 nahe der zum Staubeinlassstutzen 20 weisenden, vorderen, kürzeren Fensterkante 212.

In einer weiteren Ausführungsform des Staubauffangbehätters 11 ist das Sichtfenster 21 von einer kompletten Seitenwand des Sammelkastens 22 gebildet, die aus durchsichtigem Material hergestellt ist.

In einer alternativen Ausführungsform des Staubauffangbehälters 11 ist der komplette Sammelkasten 22 aus durchsichtigem Material gefertigt, so dass die Staubfüllung von allen Seiten optisch erfasst werden kann.

In einer weiteren alternativen Ausführungsform des Staubauffangbehälters 11 besteht die Behälterwand bzw. der Sammelkasten 22 aus transparentem Material mit milchig-matter Oberfläche. Das Sichtfenster 21 ist dann durch eine Aussparung in der milchig-matten Oberfläche gebildet.

## Patentansprüche

1. Staubauffangbehälter für eine eine Staubabsaügvorrichtung aufweisende Handwerkzeugmaschine (10), mit einer ein Staubspeictiervolumen einschließenden Behälterwand, die zwei Stirnseiten und zwei Längsseiten aufweist, mit einer in der einen Stirnseite der Behälterwand angeordneten Staubeinlassöffnung (19) zum Anschließen an einen Staubausblasstutzen (18) der Handwerkzeugmaschine (10) und mit einem in der einen Längsseite der Behälterwand angeordneten Sichtfenster (21), **dadurch gekennzeichnet, dass** im Sichtfenster (21) zwei rechtwinklig zueinander angeordnete Füllstandmarken (29,30) vorgesehen sind, von denen die eine Füllstandsmarke (29) eine empfohlene Maximalfüllmenge bei im wesentlich horizontaler Ausrichtung des Staubauffangbehälters und die andere Füllstahdsmarke (30) eine empfohlene Maximalfüllmenge bei im Wesentlichen vertikaler Ausrichtung des Staubauffangbehälters markiert.

2. Staubauffangbehälter nach Anspruch 1, **dadurch gekennzeichnet, dass** das Sichtfenster (21) rechtwinklig ist und die Füllstandmarken (29, 30) von zwei im Parallelabstand zu jeweils einer Fensterkante (211, 212) verlaufenden Linien gebildet sind, von denen die eine Linie nahe der in Vertikalausrichtung des Staubauffangbehälters oberen, langen Fensterkante (211) und die andere nahe der zur Staubeinlassöffnung (19) weisenden, vorderen, kurzen Fensterkante (212) verläuft.

3. Staubauffangbehälter nach Anspruch 1 oder 2, **dadurch gekennzeichnet, dass** die Anordnung des Sichtfensters (21) in der Längsseite der Behälterwand nahe der die Staubeinlassöffnung (19) aufweisenden Stirnseite der Behälterwand vorgenommen ist.

4. Staubauffangbehälter nach einem der Ansprüche 1 bis 3, **dadurch gekennzeichnet, dass** die Behälterwand aus transparentem Material mit milchig-matter Öberfläche besteht und das Sichtfenster (21) durch eine Aussparung in der milchig-matten Oberfläche gebildet ist.

5. Staubauffangbehälter nach einem der Ansprüche 1 bis 4, **gekennzeichnet durch** eine zweiteilige Ausbildung aus einem Sammelkasten (22) und einem diesen verschließenden Deckel (23) und **dadurch**, dass die Staubeinlassöffnung (19) und das Sichtfenster (21) in der Kastenwand des Sammelkastens (22) angeordnet sind.

6. Staubauffangbehälter nach Anspruch 5, **dadurch gekennzeichnet, dass** das Sichtfenster (21) von einer aus durchsichtigem Material hergestellten Seitenwand (224) des Sammelkastens (22) gebildet ist.

## Claims

1. Dust collecting container for a machine hand tool (10) which has a dust extraction device, with a container wall that encloses a dust storage capacity that has two end faces and two long sides, with a dust inlet opening (19) for connecting to a dust blowout adapter (18) of the machine hand tool (10) arranged in the one end face of the container wall, and with a sight window (21) arranged in the one long side of the container wall, **characterized in that** two level marks (29, 30) are arranged at right angles to each other in the sight window (21), with one level mark (29) marking a recommended maximum fill level when the dust collecting container is in the essentially horizontal alignment and the other level mark (30) marking a recommended maximum fill level when the dust collecting container is in the essentially vertical alignment.

2. Dust collecting container according to Claim 1, **characterized in that** the sight window (21) is rectangular and the level marks (29, 30) are formed by two lines each of which runs at a distance from and parallel to a window edge (211, 212), with one of said lines running close to the top, long window edge (211) in the vertical alignment of the dust collecting container and the other running close to the front, short window edge (212) facing the dust inlet opening (19).

3. Dust collecting container according to Claim 1 or 2, **characterized in that** the sight window (21) is arranged in the long side of the container wall close to the end face of the container wall facing the dust inlet opening (19).

4. Dust collecting container according to one of Claims 1 to 3, **characterized in that** the container wall consists of transparent material with a milky matt surface and the sight window (21) is formed by a cutout in the milky matt surface.

5. Dust collecting container according to one of Claims 1 to 4, **characterized by** a two-part embodiment of a collecting box (22) and a cover (23) covering said collecting box (22) and in that the dust inlet opening (19) and the sight window (21) are arranged in the box wall of the collecting box (22).

6. Dust collecting container according to Claim 5, **characterized in that** the sight window (21) is formed by a side wall (224) of the collecting box (22) made from transparent material.

## Revendications

1. Réceptacle à poussière pour une machine-outil à main (10) équipée d'un dispositif d'aspiration de poussière, comprenant une paroi de réceptacle délimitant un volume de réception de poussière, cette paroi ayant deux côtés frontaux et deux côtés longitudinaux, un orifice d'entrée de poussière (19) réalisé dans l'un des côtés frontaux de la paroi du réceptacle pour être raccordé à un ajutage de sortie de poussière (18) de la machine-outil à main (10) ainsi qu'une fenêtre (21) dans l'un des grands côtés de la paroi du réceptacle,
**caractérisé en ce que**
la fenêtre (21) comporte deux repères de remplissage (29, 30) perpendiculaires l'un à l'autre, l'un des repères de remplissage (29) indiquant une quantité maximale de remplissage, recommandée pour le réceptacle à poussière aligné pratiquement dans la direction horizontale et l'autre repère de niveau de remplissage (30) indique la quantité recommandée maximale de remplissage pour un réceptacle à poussière aligné pratiquement verticalement.

2. Réceptacle à poussière selon la revendication 1,
**caractérisé en ce que**
la fenêtre (21) est rectangulaire et les repères de niveau de remplissage (29, 30) sont constitués par deux lignes parallèles chaque fois à un bord de fenêtre (211, 212), l'une des lignes étant proche de l'arête longitudinale supérieure (211) de la fenêtre lorsque le réceptacle à poussière est proche de son alignement vertical et l'autre ligne est proche de l'arête courte (212) avant, de la fenêtre, proche de l'orifice d'entrée de poussière (19).

3. Réceptacle à poussière selon la revendication 1 ou 2,
**caractérisé en ce que**
la disposition de la fenêtre (21) dans le grand côté de la paroi du réservoir est proche du côté frontal de la paroi du réceptacle munie de l'orifice d'entrée de poussière (19).

4. Réceptacle à poussière selon l'une des revendications 1 à 3,
**caractérisé en ce que**
la paroi du réceptacle est en matière transparente avec une surface mate laiteuse et la fenêtre (21) est formée par un dégagement dans la surface mate laiteuse.

5. Réceptacle à poussière selon l'une des revendications 1 à 4,
**caractérisé par**
une réalisation en deux parties en un boîtier collecteur (22) et un couvercle (23) qui le ferme et en ce que l'orifice d'entrée de poussière (19) et la fenêtre (21) sont prévus dans la paroi du boîtier collecteur (22).

6. Réceptacle à poussière selon la revendication 5,
**caractérisé en ce que**
la fenêtre (21) est réalisée avec la matière transparente de la paroi latérale (224) du boîtier collecteur (22).
